# EUROPEAN PATENT APPLICATION

(11) **EP 2 846 518 A1**
(43) Date of publication of application: **11.03.2015**
(21) Application number: 14184078.5
(22) Date of filing: 09.09.2014
(51) Int. Cl.: H04M 1/2745, G06F 17/30, G06F 3/023, G06F 3/0482

(54) **Device and method for identifying data**

(30) Priority: 09.09.2013 US 201314021718
(71) Applicant: BlackBerry Limited, Waterloo, ON N2K 0A7 (CA)
(72) Inventor: Ainalem, Mikael, 21140 Malmö (SE); Gardenfors, Dan Zacharias, 21158 Malmö (SE)
(74) Representative: Carpmaels & Ransford LLP

(57) **Abstract**

There is provided a method in an electronic device having a display and means for receiving user input, the method comprising detecting a first user input in a first display area of a display, updating a display of data on a second display area of the display in accordance with the detected first user input, generating a third display area on the display for receiving a second user input, detecting a second user input in the third display area and updating the display of the data in the second display area in accordance with the detected second user input. There is also provided an electronic device comprising processing circuitry which is configured to carry out the method.

## Description

### Technical Field

The present disclosure relates to a device and method for identifying data, and particularly to the identification of a data item of a plurality of data items displayed on a display. In particular, it relates to the identification of a data item of a plurality of data items by detecting first and second user inputs.

### Background

It is common to display a data item of a plurality of data items on a display of an electronic device. A user of the electronic device can select the displayed data item from the plurality of data items by using what is known as a bar, and in particular a scroll bar. A single scroll bar is usually placed adjacent to the plurality of data items. The scroll bar can receive an input which is used to update which data item of a plurality of data items is currently displayed. In particular, the scroll bar can correspond to a position of a data item of a plurality of data items, and movement of the bar to a position will display the corresponding data item of a plurality of data items.

### Brief Description of the Drawings

The present disclosure can be understood with reference to the description of the embodiments set out below, in conjunction with the appended drawings in which:
Fig. 1 is a schematic diagram illustrating components of an electronic device usable by a user;
Fig. 2 is a plan view of the upper external side of one form of the electronic device usable by the user;
Fig. 3 is a plan view of the upper external side of another form of the electronic device usable by the user;
Fig. 4 is a schematic diagram of a system in which the aforementioned electronic devices can be employed;
Fig. 5 is a flow diagram showing a method for identifying data;
Fig. 6 is a display with first and second display areas;
Fig. 7 is a display with first, second and third display areas;
Fig. 8 is a display with first, second, third and fourth display areas; and
Fig. 9 is a gesture which can be used to identify data.

### Description

The disclosure below is a description of one or more exemplary embodiments which are not intended to be limiting on the scope of the appended claims.

In a first aspect of this disclosure, there is provided a method for identifying data stored on an electronic device, the method comprising detecting a first user input in a first display area of a display, updating in a first updating step a display of data on a second display area of the display in accordance with the detected first user input, generating a third display area on the display for receiving a second user input, detecting a second user input in the third display area and updating in a second updating step the display of the data in the second display area in accordance with the detected second user input.

The first updating step of the method may further comprise updating the display of data in the second display area on detection of the first user input, and the second updating step of the method may comprise updating the display of data in the second display area upon detection of the second user input. The first and second updating steps may be performed together so that the display is updated in accordance with both the detected first and second inputs.

The first updating step of the method may comprise updating the display of data in the second display once upon detection of the first user input but before the detection of the second user input, and the second updating step of the method may comprise updating the display of data in the second display upon detection of the second user input.

Preferably, the method comprises displaying a plurality of data items in the second display area. The first updating step of the method may further comprise, responsive to the detected first user input, identifying at least one data item of the plurality of data items. The second updating step of the method may further comprise, responsive to the detected second user input, identifying at least one data item of the plurality of data items. The method may further comprise displaying a plurality of characters in the first display area.

The method may further comprise displaying a plurality of characters in the third display area.

The method may further comprise identifying a first character on the first display area to which the first user input corresponds, the first updating step comprising updating the display of data in the second display area to display data items corresponding to the detected character, identifying a second character on the third display area to which the second user input corresponds, the second updating step comprising updating the display of data in the second display area to display data items corresponding to both of the identified first and second characters.

The second updating step of the method may further comprise displaying only data items which comprise as first-positioned and second-positioned characters respectively the identified first and second characters.

The method may further comprise displaying in the third display area a subset of the characters displayed in the first display area. The subset of characters may comprise at least one instance of each second-positioned character comprised within each data item which share the same first-positioned as the identified first character.

The method may further comprise determining that only one data item corresponds to the identified first and second characters or comprises as first-positioned and second-positioned characters respectively the identified first and third characters, and selecting the data item upon detection of the second user input.

The method may further comprise generating a fourth display area on the display comprising a plurality of characters for receiving a third user input, identifying a third character on the fourth display area to which the third user input corresponds, and in a third updating step, updating the display of data in the second display area to display data items corresponding to the identified first, second and third characters.

The third updating step of the method may further comprise updating the display of data in the second display area upon detection of the third user input. The second updating step may comprise updating the display of data in the second display once upon detection of the second user input but before the detection of the third user input, and the third updating step may comprise updating the display of data in the second display upon detection of the third user input.

The third updating step of the method may further comprise, responsive to the detected third user input, identifying at least one data item of the plurality of data items.The third updating step of the method may further comprise displaying only data items which comprise as first-positioned, second-positioned and third characters respectively the identified first, second and third characters.

The method may further comprise displaying in the fourth display area a subset of the characters displayed in the third display area. The subset of characters may comprise at least one instance of each third-positioned character comprised within each data item which share the same first-positioned and second-positioned characters respectively as the identified first and second characters. Alternatively, each subset of characters in each bar may be completely independent or uncorrelated from each other.

The method may further comprise determining that only one data item corresponds to the identified first second, and third characters or that only one data item comprises as first-positioned, second-positioned and third-positioned characters respectively the identified first, second and third characters, and selecting the data item upon detection of the third user input.

In a second aspect of this disclosure, there is provided a method for identifying data stored on an electronic device, the method comprising detecting a first user input in a first display area of a display, generating a third display area on the display for receiving a second user input, detecting a second user input in the third display area and updating in a second updating step the display of the data in the second display area in accordance with the detected first and second user inputs.

The updating step of the method may further comprise updating the display of data in the second display area upon detection of the second user input. The updating step of the method may further comprise updating the display of data in the second display area once only upon detection of the second user input.

Preferably, the method comprises displaying a plurality of data items in the second display area. The updating step of the method may further comprise, responsive to the detected first user input, identifying at least one data item of the plurality of data items. The updating step of the method may further comprise, responsive to the detected second user input, identifying at least one data item of the plurality of data items.

The method may further comprise displaying a plurality of characters in the first display area.

The method may further comprise displaying a plurality of characters in the third display area.

The method may further comprise identifying a first character on the first display area to which the first user input corresponds, identifying a second character on the third display area to which the second user input corresponds, the second updating step comprising updating the display of data in the second display area to display data items corresponding to both of the identified first and second characters.

The updating step of the method may further comprise displaying only data items which share as first-positioned and second-positioned characters respectively the identified first and second characters.

The method may further comprise displaying in the third display area a subset of the characters displayed in the first display area. The subset of characters may comprise at least one instance of each second-positioned character comprised within each data item which share the same first-positioned as the identified first character.

The method may further comprise determining that only one data item corresponds to the identified first and second characters or comprises as first-positioned and second-positioned characters respectively the identified first and third characters, and selecting the data item upon completion of the second user input.

The method may further comprise generating a fourth display area on the display comprising a plurality of characters for receiving a third user input, identifying a third character on the fourth display area to which the third user input corresponds, and in a wherein the updating step comprises updating the display of data in the second display area to display data items corresponding to the identified first, second and third characters.

The updating step of the method may further comprise updating the display of data upon detection of the third user input. The updating step of the method may further comprise updating the display of data in the second display area once only upon detection of the third user input.

The updating step of the method may further comprise, responsive to the detected third user input, identifying at least one data item of the plurality of data items.

The updating step of the method may further comprise displaying only data items which comprise as first-positioned, second-positioned and third characters respectively the identified first, second and third characters.

The method may further comprise displaying in the fourth display area a subset of the characters displayed in the third display area. The subset of characters may comprise at least one instance of each third-positioned character comprised within each data item which share the same first-positioned and second-postioned characters respectively as the identified first and second characters. Alternatively, each subset of characters in each bar may be completely independent or uncorrelated from each other.

The method may further comprise determining that only one data item corresponds to the identified first second, and third characters or that only one data item comprises as first-positioned, second-positioned and third-positioned characters respectively the identified first, second and third characters, and selecting the data item upon detection of the third user input.

In the first and second aspects of this disclosure, the first user input may be via an input interface, such as a touch-sensitive input interface, and the second user input via the input interface, such as the touch-sensitive input interface, and the third user input via the touch-sensitive input interface With such an touch-sensitive input interface, the method may further comprise a touch-sensitive input interface overlaid or comprised within the display, and wherein the identified first or second or third character is identified by detecting a touch on the touch-sensitive input interface on or in the vicinity of the identified first or second or third character respectively. Alternatively, the first and second and third user inputs may be user input received via any form of input interface for interacting with the display. For example, the input interface may be a pointing device, such as, for example, a mouse, trackball, trackpad etc., for controlling a pointer on the display and may comprise one or more of predefined movements, e.g. movement in a particular direction for a predetermined distance, and/or one or more predetermined additional inputs, such as one or more detected button presses input via the pointing device.

In the first and second aspects of this disclosure, the data item may be a contact. The contact may be one of a number of contacts, each stored in memory and capable of being displayed on the display in the way outlined above. The data may also be a media item in a digital media item library, or an item in a database, or any data that has a correlated/associated string value.In the first and second aspects of this disclosure, the method may further comprise the detection of the first user input which is continuous with the second user input, and/or wherein the second user input is continuous with the third user input, wherein the continuous input is implemented by a continuous gesture.

In the first and second aspects of this disclosure, the method may further comprise generating the first and third display areas such that they are orthogonally positioned on the display relative to each other.

In the first and second aspects of this disclosure, the method may further comprise generating the third and fourth display areas such that they are orthogonally positioned on the display relative to each other.The description above is with reference to additional display areas referred to as the third (and also fourth) display areas. It will be understood that the concepts presented above can be extended to a plurality of additional display areas. The number of additional display areas can equate to or be less than the maximum number of inputs which define all of the data items.

In a third aspect of this disclosure, there is provided a computer-readable medium comprising executable instructions which, when executed, cause a processor to perform any one of the above methods. The executable instructions may be computer-executable instructions. A device may be configured to receive or process the executable instructions from the computer-readable medium, and/or comprise the executable instructions, and be configured to execute the executable instructions so as to perform the method. The computer-readable medium may be a non-transitory computer readable medium.

In a fourth aspect of this disclosure, there is provided an electronic device comprising a display configured to display an item and processing circuitry configured to detect a first user input in a first display area of a display, update in a first updating step a display of data on a second display area of the display in accordance with the detected first user input, generate a third display area on the display for receiving a second user input, detect a second user input in the third display area, and update in a second updating step the display of the data in the second display area in accordance with the detected second user input.

The processing circuitry may be further configured to perform any one of the above methods.

The processing circuitry may be configured to perform the first updating step and update the display of data in the second display once upon detection of the first user input but before the detection of the second user input, and perform the second updating step and update the display of data in the second display upon detection of the second user input.

Preferably, the processing circuitry is configured to display a plurality of data items in the second display area. The processing circuitry is configured to perform the first updating step, responsive to the detected first user input, and identify at least one data item of the plurality of data items. The processing circuitry is configured to perform the second updating step, responsive to the detected second user input, and identify at least one data item of the plurality of data items. The processing circuitry may be further configured display a plurality of characters in the first display area.

The processing circuitry may be further configured to display a plurality of characters in the third display area.

The processing circuitry may be further configured to identify a first character on the first display area to which the first user input corresponds, perform the first updating step to display data items corresponding to the detected character, identify a second character on the third display area to which the second user input corresponds, perform the second updating step to display data items corresponding to both of the identified first and second characters.

The processing circuitry may be further configured to perform the second updating to display only data items which comprise as first-positioned and second-positioned characters respectively the identified first and second characters.

The processing circuitry may be further configured to display in the third display area a subset of the characters displayed in the first display area. The subset of characters may comprise at least one instance of each second-positioned character comprised within each data item which share the same first-positioned as the identified first character.

The processing circuitry may be further configured to determine that only one data item corresponds to the identified first and second characters or comprises as first-positioned and second-positioned characters respectively the identified first and third characters, and selecting the data item upon detection of the second user input.

The processing circuitry may be further configured to generate a fourth display area on the display comprising a plurality of characters for receiving a third user input, identify a third character on the fourth display area to which the third user input corresponds, and perform a third updating step to display data items corresponding to the identified first, second and third characters.

The processing circuitry may be further configured to perform the third updating step to display data in the second display area upon detection of the third user input. The processing circuitry may be further configured to perform the second updating step to update the display of data in the second display area upon detection of the second user input but before the detection of the third user input, and perform the third updating step to update the display of data in the second display area upon detection of the third user input.

The processing circuitry may be further configured to perform the third updating step, responsive to the detected third user input, to identify at least one data item of the plurality of data items.

The processing circuitry may be further configured to perform the third updating step to display only data items which comprise as first-positioned, second-positioned and third characters respectively the identified first, second and third characters.

The processing circuitry may be further configured to display in the fourth display area a subset of the characters displayed in the third display area. The subset of characters may comprise at least one instance of each third-positioned character comprised within each data item which share the same first-positioned and second-positioned characters respectively as the identified first and second characters. Alternatively, each subset of characters in each bar may be completely independent or uncorrelated from each other.

The processing circuitry may be further configured to determine that only one data item corresponds to the identified first second, and third characters or that only one data item comprises as first-positioned, second-positioned and third-positioned characters respectively the identified first, second and third characters, and select the data item upon detection of the third user input.

In a fifth aspect of this disclosure, there is provided an electronic device comprising a display configured to display an item and processing circuitry configured to detect a first user input in a first display area of a display, generate a third display area on the display for receiving a second user input, detect a second user input in the third display area, and update in an updating step the display of the data in the second display area in accordance with the detected first and second user inputs.

The processing circuitry may be further configured to perform any one of the above methods.

The processing circuitry may be configured to perform the updating step to display data in the second display area upon detection of the second user input. The processing circuitry may be configured to perform the updating step to display data in the second display area once only upon detection of the second user input.

Preferably, the processing circuitry is configured to display a plurality of data items in the second display area. The processing circuitry is configured to perform the first updating step, responsive to the detected first user input, and identify at least one data item of the plurality of data items. The processing circuitry is configured to perform the second updating step, responsive to the detected second user input, and identify at least one data item of the plurality of data items. The processing circuitry may be further configured display a plurality of characters in the first display area.

The processing circuitry may be further configured to display a plurality of characters in the third display area.

The processing circuitry may be further configured to identify a first character on the first display area to which the first user input corresponds, perform the first updating step to display data items corresponding to the detected character, identify a second character on the third display area to which the second user input corresponds, perform the second updating step to display data items corresponding to both of the identified first and second characters.

The processing circuitry may be further configured to perform the second updating to display only data items which comprise as first-positioned and second-positioned characters respectively the identified first and second characters.

The processing circuitry may be further configured to display in the third display area a subset of the characters displayed in the first display area. The subset of characters may comprise at least one instance of each second-positioned character comprised within each data item which share the same first-positioned as the identified first character.

The processing circuitry may be further configured to determine that only one data item corresponds to the identified first and second characters or comprises as first-positioned and second-positioned characters respectively the identified first and third characters, and selecting the data item upon detection of the second user input.

The processing circuitry may be further configured to generate a fourth display area on the display comprising a plurality of characters for receiving a third user input, identify a third character on the fourth display area to which the third user input corresponds, and update the display of data in the second display area to display data items corresponding to the identified first, second and third characters.

The processing circuitry may be further configured to perform the updating step of upon detection of the third user input. The processing circuitry may be further configured to perform the updating step to update the display of data in the second display once only upon detection of the third user input.

The processing circuitry may be further configured to perform the updating step, responsive to the detected third user input, to identify at least one data item of the plurality of data items.

The processing circuitry may be further configured to perform the third updating step to display only data items which comprise as first-positioned, second-positioned and third characters respectively the identified first, second and third characters.

The processing circuitry may be further configured to display in the fourth display area a subset of the characters displayed in the third display area. The subset of characters may comprise at least one instance of each third-positioned character comprised within each data item which share the same first-positioned and second-positioned characters respectively as the identified first and second characters. Alternatively, each subset of characters in each bar may be completely independent or uncorrelated from each other.

The processing circuitry may be further configured to determine that only one data item corresponds to the identified first second, and third characters or that only one data item comprises as first-positioned, second-positioned and third-positioned characters respectively the identified first, second and third characters, and select the data item upon detection of the third user input.

The processing circuitry in the fourth and fifth aspects of this disclosure may be further configured to receive, the first user input via an input interface, such as a touch-sensitive input interface, and the second user input via the input interface, such as the touch-sensitive input interface, and the third user input via the touch-sensitive input interface With such an touch-sensitive input interface, the method may further comprise a touch-sensitive input interface overlaid or comprised within the display, and wherein the identified first or second or third character is identified by detecting a touch on the touch-sensitive input interface on or in the vicinity of the identified first or second or third character respectively. Alternatively, the first and second and third user inputs may be user input received via any form of input interface for interacting with the display. For example, the input interface may be a pointing device, such as, for example, a mouse, trackball, trackpad etc., for controlling a pointer on the display and may comprise one or more of predefined movements, e.g. movement in a particular direction for a predetermined distance, and/or one or more predetermined additional inputs, such as one or more detected button presses input via the pointing device.

The processing circuitry in the fourth and fifth aspects of this disclosure may be configured to identify the data item which may be a contact. The contact may be one of a number of contacts, each stored in memory and capable of being displayed on the display in the way outlined above. The data may also be a media item in a digital media item library, or an item in a database, or any data that has a correlated/associated string value.

The processing circuitry in the fourth and fifth aspects of this disclosure may be configured to detect the first user input which is continuous with the second user input, and/or wherein the second user input is continuous with the third user input, wherein the continuous input is implemented by a continuous gesture.

The processing circuitry in the fourth and fifth aspects of this disclosure may be configured to generate the first and third display areas such that they are orthogonally positioned on the display relative to each other.

The processing circuitry in the fourth and fifth aspects of this disclosure may be configured to generate the third and fourth display areas such that they are orthogonally positioned on the display relative to each other.

The electronic device may be a computer device, such as a personal computer, laptop, tablet computer, and the second electronic device may be a wireless communication device, such as handheld communication device, for example: a mobile phone, e.g. smartphone; or tablet device.

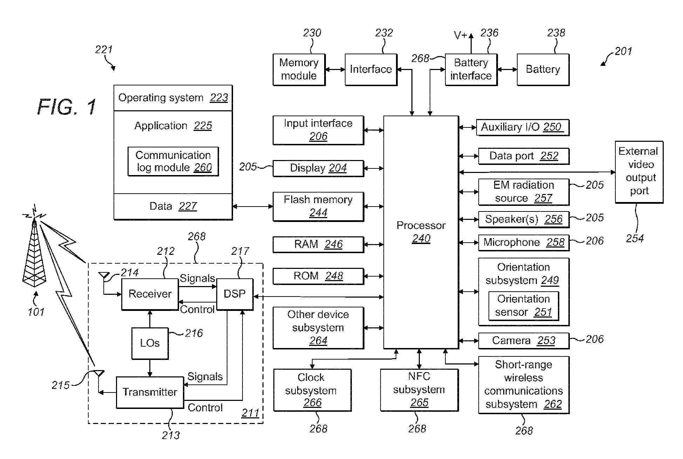

Reference is made to Fig. 1 which illustrates an electronic device 201, such as a first and/or second electronic device, which is usable in accordance with the disclosure below.

The electronic device 201 may be a computer device, e.g. personal computer (PC) or laptop, a wireless communication device, such as handheld communication device, for example: a mobile phone, e.g. smartphone; or tablet device.

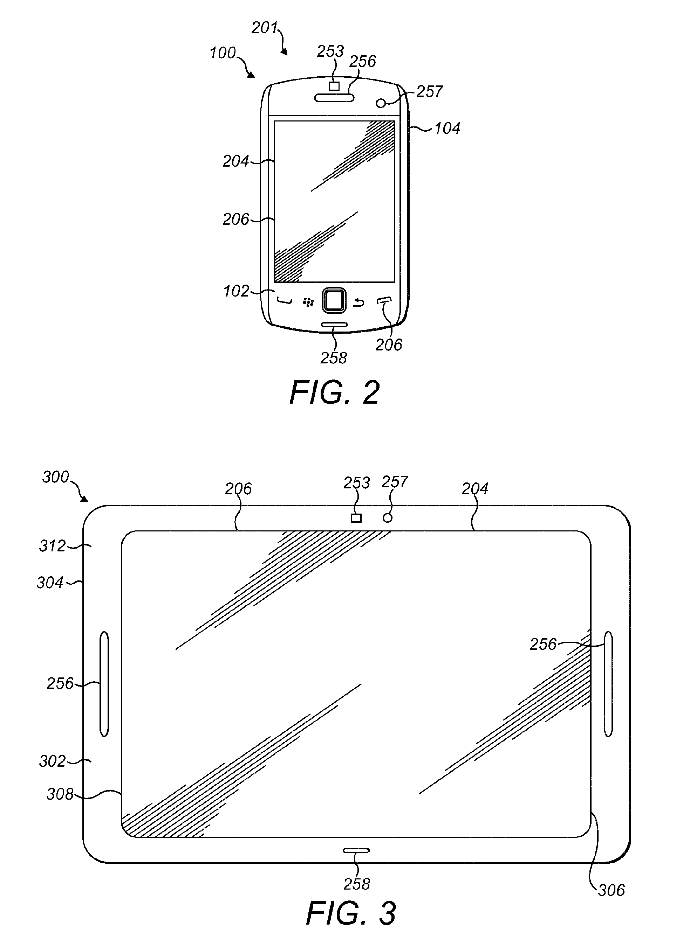

An electronic device 201 such as the electronic device 201 of Fig. 1 is configured to generate a user-controllable interface on a display, such as a built-in display and/or on a remote, external display device. In the context of this disclosure, the term "remote" means a display screen which is not built-in to the electronic device 201 with which the electronic device 201 communicates via a physical wired connection or via a wireless connection. The display is shown as display 204 built in to the electronic device 201 in Fig. 2 in which the electronic device 201 is a wireless communication device, and is also shown as external display device 300 in Fig. 3 in which the display 204 is separate to the electronic device 201.

It will be appreciated that, in certain embodiments, some of the features, systems or subsystems of the electronic device 201 discussed below with reference to Fig. 1 may be omitted from electronic devices 201 which are intended to perform solely operations in relation to the generation and output of display data on the display and the modification of media content output. However, a full disclosure of a number of features which may be present in the electronic device 201 is given below.

In one embodiment, the electronic device 201 is a computer, such as a personal computer (PC) or laptop, with electronic communication capabilities which enable it to communicate with other electronic devices (e.g. similar or identical to electronic device 201), networks and/or servers. In this regard, communication may be direct between devices or may take place over a network, such as the Internet. In both cases, communication may take place via as a short-range radio frequency link, e.g. Bluetooth, or via a data network, which may be wired (e.g. wired Ethernet) or may be wireless (e.g., WiFi using IEEE 802.11 radio standards).

In another embodiment, the electronic device 201 is a communication device, such as a wireless communication device, and may be a mobile or handheld device, such as a mobile or handheld communication device, for example having data and/or voice communication capabilities. It may also have the capability to communicate with other electronic devices (similar or identical to electronic device 201). In this regard, communication may be direct between the devices or may take place over a data network, such as the Internet. In both cases, communication may take place via as a short-range radio frequency link, e.g. Bluetooth, or via a data network, which may be wired (e.g. wired Ethernet) or may be wireless (e.g., WiFi using IEEE 802.11 radio standards).

Depending on the functionality provided by the electronic device 201, the electronic device 201 may be a multiple-mode communication device configured for both data and voice communication, a mobile telephone, such as a smartphone, a wearable computer such as a watch, a tablet computer, a personal digital assistant (PDA), or a computer system such as a notebook, laptop or desktop system. It will be appreciated that the electronic device 201 may take other forms, including any one of the forms described herein. In addition, the electronic device 201 may take other forms apart from those specifically listed above. The electronic device 201 may also be referred to as a mobile, handheld or portable communications device, a communication device, a mobile device and, in some cases, as a device. In the context of this disclosure, the term "mobile" may mean that the device is of a size or weight which makes it readily portable by a single individual, e.g. of a weight less than 5, 4, 3, 2, 1, 0.5, 0.4, 0.3, 0.2 or 0.1 kilograms, or of a volume less than 15,000, 10,000, 5,000, 4,000, 3,000, 2,000, 1,000, 500, 400, 300, 200, 100, 90, 80, 70, 60, 50, 40, 30, 20, 10 or 5 cubic centimetres. As such, the device 201 may be portable in a bag, or clothing pocket.

The electronic device 201 includes processing circuitry being, or including, a processor 240 (such as a microprocessor), which can control the operation of the electronic device 201. In certain electronic devices, more than one processor is provided forming the processing circuitry, with each processor in communication with each other and configured to perform operations in parallel, so that they together control the overall operation of the electronic device. For the purposes of the present disclosure, reference is made to processor 240; however this can also be intended as a reference to processing circuitry, for example in which more than one processor performs the disclosed function or functions.

The processor 240 interacts with device subsystems, such as a communication subsystem 211, which may be wired or wireless, but which is shown in Fig. 1 in exemplary form as a wireless communication subsystem for exchanging radio frequency signals via a wireless network 101 to perform communication functions. The processor 240 is communicably coupled with additional device subsystems including one or more output interfaces 205 (such as one or more of: a display 204 (built-in, or remote), a speaker 256, electromagnetic (EM) radiation source 257), one or more input interfaces 206 (such as one or more of: a camera 253, microphone 258, keyboard (not shown), control buttons (not shown), a navigational input device (not shown), such as a pointer device, e.g. mouse, a touch-sensitive overlay (not shown)) associated with a touch-sensitive interface, an orientation subsystem 249, memory (such as flash memory 244, random access memory (RAM) 246, read only memory (ROM) 248, etc.), auxiliary input/output (I/O) subsystems 250, a data port 252 (which may be a serial data port, such as a Universal Serial Bus (USB) data port), an external video output port 254, a near field communications (NFC) subsystem 265, a short-range communication subsystem 262, a clock subsystem 266, a battery interface 236, and other device subsystems generally designated as 264. Some of the subsystems shown in Fig. 1 perform communication-related functions, whereas other subsystems may provide "resident" or on-device functions.

The electronic device 201 stores data 227 in an erasable persistent memory, which in one embodiment is the flash memory 244. In various embodiments, the data 227 includes service data including information used by the electronic device 201 to establish and maintain communication with the wireless network 101. The data 227 may also include user application data such as electronic messages (e.g. email, SMS etc.), address book and contact information, calendar and schedule information, notepad documents, presentation documents and information, word processor documents and information, spreadsheet documents and information; desktop publishing documents and information, database files and information; image files, video files, audio files, internet web pages, and other commonly stored user information stored on the electronic device 201 by its user, and other data. The data may also include program application data such as functions, controls and interfaces from an application such as a message application (e.g. email, SMS etc.), an address book application, a calendar application, a notepad application, a presentation application, a word processor application, a spread sheet application, a desktop publishing application, a database application, a media application such as a picture viewer, a video player or an audio player, and a web browser. The data 227 stored in the persistent memory (e.g. flash memory 244) of the electronic device 201 may be organized, at least partially, into one or more databases or data stores. The databases or data stores may contain data items of the same data type or associated with the same application. For example, messages, such as email or SMS messages, contact records, and task items may be stored in individual databases within the device memory.

The electronic device 201 includes a clock subsystem or module 266 comprising a system clock configured to measure system time. In one embodiment, the system clock comprises its own alternate power source. The system clock provides an indicator of a current time value, the system time, represented as a year/month/day/hour/minute/second/milliseconds value. In other embodiments, the clock subsystem 266 additionally or alternatively provides an indicator of the current time value represented as a count of the number of ticks of known duration since a particular epoch.

The clock subsystem 266, the communication subsystem 211, the NFC subsystem, 265, the short-range wireless communications subsystem 262, and the battery interface 236 together may form a status report subsystem which is configured to provide an indicator of the operating status of the device.

The display 204 receives display data generated by the processor 240, such that the display 204 displays certain application data stored as a segment of the data 227 from the memory (any of the flash memory 244, random access memory (RAM) 246, read only memory (ROM) 248) in a predetermined way on display screen (not shown) of the display 204, according to the processing performed by the processor 240.

In certain embodiments, the external video output port 254 is integrated with the data port 252. The external video output port 254 may be configured to connect the electronic device 201 via a wired connection (e.g. video graphics array (VGA), digital visual interface (DVI) or high definition multimedia interface (HDMI)) to an external (or remote) display device 300 which is separate and remote from the electronic device 201 and its display 204. The processor 240 outputs external display data generated by the processor 240 via the external video output port 254, such that the external display device 300 can display application data from the memory module in a predetermined way on an external display screen of the external display device 300. The processor 240 may also communicate the external display data to the external display device 300 in a similar fashion over a wireless communications path (for example via Miracast^{™}). The wireless communication path may be supported by Intel® WiDi. At any given time, the display data and the external display data generated by the processor 240 may be identical or similar for a predetermined period of time, but may also differ for a predetermined period of time, with the processor 240 controlling whether the display data and the external display data are identical or differ based on input from one or more of the input interfaces 206. In this context, the word "identical" means that both sets of data comprise similar content so as to generate an identical or substantially similar display at substantially the same time on both the external display device 300 and the display 204. In this context, the word "differ" means that the external display data and display data are not identical; this is to say that these data may (but not necessarily) include identical elements of data, for example representative of the same application data, but the external display data and display data are not wholly identical. Hence, the display on both the external display device 300 and the display 204 are not wholly identical, although similar or identical individual items of content based on the application data may be displayed on both the external display device 300 and the display 204. Either one of the display 204 or external display device 300 may be optional. References made herein to data displayed by the display 204 are intended to include references to data displayed on the display of the external display device 300, and vice-a-versa, whether or not one or other of the display 204 or external display device 300 are present.

The electronic device 201 includes an input interface 206 (for example: a pointing device, such as a mouse, trackpad, trackball etc.; and/or touch-sensitive interface, such as an interface overlaid on display 204) in communication with the processor 240. The pointing device, if present, may be built-in to electronic device 201, e.g. as a trackpad or trackball, or may be connected to the device 201, including its processor 240 via one or more of: the data port 252, the communication subsystem 211, the auxiliary input/output (I/O) subsystems 250, and the short-range wireless communications subsystem 262. The touch-sensitive interface, if present, may be constructed using a touch-sensitive input surface which is connected to processor 240 an electronic controller and which overlays the display 204. The touch-sensitive input surface and the electronic controller provide a touch-sensitive input interface 206 and the processor 240 interacts with the touch-sensitive overlay via the electronic controller. The input interface 206 may control the position of a pointer displayed on the display 204. The input interface 206 generally provides positional information of current or intended user input on the display 204, e.g. the position of a touch input on the touch-sensitive surface, if present, or the position of the pointer, if present, on the display 204.

The processor 240 may be in communication with the memory and input interface 206 to detect user input via the input interface 206. The processor 240 can then generate or update display data comprising a display object, e.g. a pointer or notification, for display by the display device 204 in accordance with the user input. The processor 240 then outputs the display data for display on the display device 204. In an embodiment, the user input may comprise one or more gestures made across the touch-sensitive interface with input interface 206.

If the input interface 206 comprises the pointing device mentioned above, the input detected by the pointing device may comprise any suitable user-based input. For example, the input may comprise one or more inputs including, for example: a continuous movement of the pointing device to cause user input (e.g. of a pointer displayed on the display 204) to be in one or more particular directions across the display 204, the pressing of one or more buttons of the pointing device, a scrolling command input by the pointing device, and any other user input received with the pointing device. It will be appreciated that the input may comprise a sequence of input elements or stages performed with the pointing device within a specified or predetermined time frame, for example: a double press of a button on the pointing device in which each press comprises an element (or a sub-input, a phase or a stage) of the input and the button presses are performed within a time frame that enables the processor 240 to detect the presses as elements of a single input; or a number of discrete phases of continuous movement of the pointing device in different directions across the display 204 in which each movement comprises an element (or a sub-input, a phase or a stage) of the user input and the movement elements are performed within a time frame that enables the processor 240 to detect movements as a single input indicative of movement in a general direction across the display.

If the input interface 206 comprises the touch-sensitive surface mentioned above, the input detected by the touch-sensitive surface interface may comprise any suitable user touch-based input. For example, the input may comprise one or more gestures as an input such as a tap, a multi-tap, a long press, a swipe or scroll or slide, a pan, a flick, a multi-swipe, a multi-finger tap, a multi-finger scroll or swipe, a pinch, a two-hand pinch, a spread, a two-hand spread, a rotation, a two-hand rotation, a slide and rotation, a multi-direction slide, a multi-finger slide and rotation, a multi-finger slide, etc. It will be appreciated that the gesture input may comprise a sequence of input elements or stages performed within a specified or predetermined time frame, for example, a three-tap gesture in which each tap comprises an element (or a sub-input, a phase or a stage) of the input and the three taps are performed within a time frame that enables the processor 240 to detect the taps as elements of a single input. Additionally or alternatively, an input may comprise removing a point of contact, e.g., a finger or stylus, from the touch-sensitive interface interface.

Many examples described herein refer to a gesture detected by the touch-sensitive interface, but other methods of gesture detection may be used. For example, a gesture may be a generalized trajectory description characterized as a sequence of 3D points in time, and as such many different sensors of the electronic device 201 may be utilized to detect such a gesture. The gesture may be performed by moving a portable electronic device or moving one or more body parts, such as fingers or thumbs as a 3D spatial gesture. For example, sensors, such as an accelerometer/gyroscope, or proximity sensors, or time-of-flight cameras may detect such gestures. Gesture recognition and detection techniques of this type are known. An accelerometer or gyroscope may be utilized to detect 3D spatial gestures. A sequence of acceleration values may be detected in the different spatial dimensions as a function of time and constitute trajectory information that can be recognized as a gesture. For example, a quick flick and a tilt of the portable electronic device are examples of detectable gestures. A 3D spatial gesture includes a continuous movement, a sequence of movements, and a series of continuous movements or sequences of movements. Proximity sensors, optical sensors, and/or cameras may be utilized to detect 3D spatial gestures comprising motion of objects spaced from the device.

A gesture input may be different to input of a command by manipulation of a control component presented on the screen because a gesture input can be performed at any location within the display screen (or a large area of the display screen) in contrast to a single contact point for a user finger or input stylus on a corresponding control element. In order to input a command using a control component, the user must contact the screen at a specific location corresponding to that component. For example, in order to change an output volume using a volume control, the user must select the volume control by touching the location at which the volume control is displayed and moving the displayed control element by a desired amount through movement of the user's finger across the screen. Such user input must therefore be precisely controlled in order to use control elements to input commands. Gesture-based inputs, on the other hand, do not require the same precise control as they are not tied to a specific location on the screen. Instead, a user wishing to, e.g., scroll through a list of media content can do so by performing a swipe gesture at any location within a media-player display.

In at least some embodiments, the touch-sensitive surface has a touch-sensitive surface which is larger than the display 204. For example, in at least some embodiments, the touch-sensitive overlay may extend overtop of a frame (not shown) which surrounds the display 204. In such embodiments, the frame (not shown) may be referred to as an active frame since it is capable of acting as part of the input interface 206. In at least some embodiments, the touch-sensitive overlay may extend to the sides of the electronic device 201.

As noted above, in some embodiments, the electronic device 201 includes a communication subsystem 211 which allows the electronic device 201 to communicate over a wireless network 101. The communication subsystem 211 includes a receiver 212, a transmitter 213, and associated components, such as one or more antenna elements 214 and 215, local oscillators (LOs) 216, and a processing module such as a digital signal processor (DSP) 217 which is in communication with the processor 240. The antenna elements 214 and 215 may be embedded or internal to the electronic device 201 and a single antenna may be shared by both receiver and transmitter. The particular design of the communication subsystem 211 depends on the wireless network 101 in which electronic device 201 is intended to operate.

In at least some embodiments, the electronic device 201 communicates with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 214 through the wireless network 101 are input to the receiver 212, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 217. In a similar manner, signals to be transmitted are processed, including modulation and encoding, for example, by the DSP 217. These DSP-processed signals are input to the transmitter 213 for digital-to-analog (D/A) conversion, frequency up conversion, filtering, amplification, and transmission to the wireless network 101 via the antenna 215. The DSP 217 not only processes communication signals, but may also provide for receiver and transmitter control. For example, the gains applied to communication signals in the receiver 212 and the transmitter 213 may be adaptively controlled through automatic gain control algorithms implemented in the DSP 217.

In some embodiments, the auxiliary input/output (I/O) subsystems 250 may include an external communication link or interface; for example, an Ethernet connection. The electronic device 201 may include other wireless communication interfaces for communicating with other types of wireless networks; for example, a wireless network such as an orthogonal frequency division multiplexed (OFDM) network. The auxiliary I/O subsystems 250 may include a vibrator for providing vibratory notifications in response to various events on the electronic device 201 such as receipt of an electronic communication or incoming phone call, or for other purposes such as haptic feedback (touch feedback).

In some embodiments, the electronic device 201 also includes a removable memory module 230 (typically including flash memory, such as a removable memory card) and a memory interface 232. Network access may be associated with a subscriber or user of the electronic device 201 via the memory module 230, which may be a Subscriber Identity Module (SIM) card for use in a GSM network or other type of memory card for use in the relevant wireless network type. The memory module 230 is inserted in or connected to the memory card interface 232 of the electronic device 201 in order to operate in conjunction with the wireless network 101.

The data port 252 may be used for providing direct communication of data with and between the device 201, including, for example, its processor 240, and another electronic device, which may be similar or identical to electronic device 201.

In at least some embodiments, the electronic device 201 may also include a device orientation subsystem 249 including at least one orientation sensor 251 which is connected to the processor 240 and which is controlled by one or a combination of a monitoring circuit and operating software. The orientation sensor 251 detects the orientation of the device 201 or information from which the orientation of the device 201 can be determined, such as acceleration. In some embodiments, the orientation sensor 251 is an accelerometer, such as a three-axis accelerometer. An accelerometer is a sensor which converts acceleration from motion (e.g. movement of the device 201 or a portion thereof due to the strike force) and gravity which are detected by a sensing element into an electrical signal (producing a corresponding change in output). Accelerometers may be available in one, two or three axis configurations. Higher order axis configurations are also possible. Accelerometers may produce digital or analog output signals depending on the type of accelerometer. The orientation sensor 251 may generate orientation data which specifies the orientation of the electronic device 201. The orientation data, in at least some embodiments, specifies the orientation of the device 201 relative to the gravitational field of the earth. Additionally or alternatively, the orientation sensor 251 may generate orientation data which specifies the orientation of the device relative to known locations or fixtures in a communication network. In some embodiments, the orientation subsystem 249 includes other orientation sensors 251, instead of or in addition to accelerometers. For example, in various embodiments, the orientation subsystem 249 may include a gravity sensor, a gyroscope, a tilt sensor, an electronic compass or other suitable sensor, or combinations thereof. In some embodiments, the device orientation subsystem 249 may include two or more orientation sensors 251 such as an accelerometer and an electronic compass. The orientation subsystem 249 may provide input to the input interface 206, such that, for example, three-dimensional gestures performed with the electronic device 201 as a whole may be detected and provide user input to the processor 240.

The electronic device 201, in at least some embodiments, may include a Near-Field Communication (NFC) subsystem 265. The NFC subsystem 265 is configured to communicate with other electronic devices 201 or tags, using an NFC communications protocol. NFC is a set of short-range wireless technologies which typically require a distance of 4 cm or less for communications. The NFC subsystem 265 may include an NFC chip and an NFC antenna. In such an embodiment, the orientation sensor 251 may generate data which specifies a distance between the electronic device 201 and an NFC transceiver.

The electronic device 201 may include a microphone or one or more speakers. In at least some embodiments, an electronic device 201 includes a plurality of speakers 256. For example, in some embodiments, the electronic device 201 includes two or more speakers 256. The two or more speakers 256 may, for example, be disposed in spaced relation to one another. That is, in at least some embodiments, the electronic device 201 may include a first speaker and a second speaker and the first speaker and the second speaker may be spatially separated from one another within the electronic device 201. In at least some embodiments, the display 204 may be disposed between the first speaker and the second speaker of the electronic device. In such embodiments, the first speaker may be located at one side of the display 204 and the second speaker may be located at another side of the display which is opposite the side of the display where the first speaker is located. For example, the first speaker may be disposed at a left side of the display and the second speaker may be disposed at a right side of the display. In at least some embodiments, each speaker 256 may be associated with a separate audio channel. The multiple speakers may, for example, be used to provide stereophonic sound (which may also be referred to as stereo).

The electronic device 201 may also include one or more cameras 253. The one or more cameras 253 may be capable of capturing images in the form of still photographs or motion video.

In at least some embodiments, the electronic device 201 includes a front facing camera 253. A front facing camera is a camera which is generally located on a front face of the electronic device 201. The front face is typically the face on which a display 204 is mounted. That is, the display 204 is configured to display content which may be viewed from a side of the electronic device 201 where the camera 253 is directed. The front facing camera 253 may be located anywhere on the front surface of the electronic device; for example, the camera 253 may be located above or below the display 204. The camera 253 may be a fixed position camera which is not movable relative to the display 204 of the electronic device 201 or the housing of the electronic device 201. In such embodiments, the direction of capture of the camera is always predictable relative to the display 204 or the housing. In at least some embodiments, the camera may be provided in a central location relative to the display 204 to facilitate image acquisition of a face.

In at least some embodiments, the electronic device 201 includes an electromagnetic (EM) radiation source 257. In at least some embodiments, the EM radiation source 257 is configured to emit electromagnetic radiation from the side of the electronic device which is associated with a camera 253 of that electronic device 201. For example, where the camera is a front facing camera 253, the electronic device 201 may be configured to emit electromagnetic radiation from the front face of the electronic device 201. That is, in at least some embodiments, the electromagnetic radiation source 257 is configured to emit radiation in a direction which may visible by the camera. That is, the camera 253 and the electromagnetic radiation source 257 may be disposed on the electronic device 201 so that electromagnetic radiation emitted by the electromagnetic radiation source 257 is visible in images detected by the camera.

In some embodiments, the electromagnetic radiation source 257 is an infrared (IR) radiation source which is configured to emit infrared radiation. In at least some embodiments, the electromagnetic radiation source 257 may be configured to emit radiation which is not part of the visible spectrum. The camera 253 may be a camera which is configured to capture radiation of the type emitted by the electromagnetic radiation source 257. Accordingly, in at least some embodiments, the camera 253 is configured to capture at least some electromagnetic radiation which is not in the visible spectrum.

In some embodiments, the electronic device 201 is provided with a service routing application programming interface (API) which provides an application with the ability to route traffic through a serial data (i.e., USB) or Bluetooth® (Bluetooth® is a registered trademark of Bluetooth SIG, Inc.) connection to a host computer system using standard connectivity protocols. When a user connects their electronic device 201 to the host computer system via a USB cable or Bluetooth® connection, traffic that was destined for the wireless network 101 is automatically routed to the electronic device 201 using the USB cable or Bluetooth® connection. Similarly, any traffic destined for the wireless network 101 may automatically be sent over the USB cable Bluetooth® connection to the host computer system for processing.

The electronic device 201 may also include a power source 238, which may be a wired power supply, such as mains supply, or battery, for example one or more rechargeable batteries that may be charged for example, through charging circuitry coupled to a battery interface 236 such as the data port 252. The power source 238 provides electrical power to at least some of the electrical circuitry in the electronic device 201, and the power interface 236 provides a mechanical and electrical connection for the power source 238. The power interface 236 is coupled to a regulator (not shown) which provides power V+ to the circuitry of the electronic device 201.

The electronic device 201 includes a short-range communication subsystem 262 which provides for wireless communication between the electronic device 201 and other electronic devices 201. In at least some embodiments, the short-range communication subsystem 262 is a wireless bus protocol compliant communication mechanism such as a Bluetooth® communication module to provide for communication with similarly-enabled systems and devices.

Any one or more of the communication subsystem 211, the auxiliary input/output (I/O) subsystems 250, the NFC subsystem 265, the short-range wireless communications subsystem 262, and data port 252 may serve as the "communication subsystem 211" (also designated as communication subsystem 268 in Fig. 1) for passing data to/from the processor 240 and remote devices (similar or identical to device 201) and/or communication networks. For example, these subsystems may be configured to receive, process and provide an indicator of an incoming message or communication being received by the electronic device 201. The incoming message may for example be an electronic message, such as an email, a message received via a social networking website, an SMS (short message service) message, or a telephone call, for example. Thus, reference herein to "communication subsystem 211" may in fact be a reference to any one or more of the communication subsystem 211, the auxiliary input/output (I/O) subsystems 250, the NFC subsystem 265, the short-range wireless communications subsystem 262, and data port 252, and thus data (including messages) received and transmitted by/from the processor 240 thereby.

The electronic device 201 may, in some embodiments, provide a data communication mode, and optionally a voice communication mode. In the data communication mode, a received data signal of an electronic message, such as a text message, an email message, or Web page download will be processed by the communication subsystem 211 and input to the processor 240 for further processing. For example, a downloaded Web page may be further processed by a browser application or an electronic message may be processed by an messaging application and the message or page itself, or notification of its arrival via the communication subsystem 211, may be output to the display 204. A user of the electronic device 201 can compose data items, such as electronic messages; for example, using the input devices in conjunction with the display 204. These composed items may be transmitted through the communication subsystem 211 over the wireless network 101.

In the voice communication mode, the electronic device 201 provides telephony functions and operates as a typical cellular or mobile phone. Received voice signals can be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input interfaces 206). Alternative voice or audio I/O subsystems, such as a voice message recording subsystem, may also be implemented on the electronic device 201. Although voice or audio signal output is typically accomplished primarily through the speaker 256, the display screen 204 may also be used to provide an indication of the identity of a calling party, duration of a voice call, or other voice call related information.

The processor 240 operates under stored program control and executes software modules 221 based on program application data stored in memory such as persistent memory; for example, in the flash memory 244. As illustrated in Fig. 1, the software modules 221 include operating system software 223 and other software applications 225.

The program application data is executable by the processor 240 to permit various functions to be performed with the electronic device 201, whereby, for example, the application data can be received, processed and the display 204 can then be adapted by the processor 240 to display the application data itself in the form of data items, or notifications or representations thereof also in the form of data items. The input interface 206 permits interaction with the data items to perform actions there-upon. The application data, such as one or more electronic messages, may be received over the data network or short-range link at the communication subsystem 211 or data port 252 which passes this data to the processor 240. A program application, such as a message application which is being executed by the processor 240 may process the received data and generate a data item representative of each received message for display on the display 204. The data item may be generated by the processor 240 in the form of display data which is passed to the display 204 for causing or adapting the display of one or more data items on the display 204. The processor 240 may cause the data item to be displayed in an electronic mailbox in conjunction with other data items. The data items may be grouped according to their related content, e.g. sender, recipient, subject, conversation, such that items pertaining to sufficiently similar or identical content, are grouped with one or more of the grouped items being a parent item with the other item(s) of the group of items being child item(s).

Referring now to Fig. 2, a front view of an electronic device 201 which in the depicted example of Fig. 2 is a communications device, such as a wireless, mobile, handheld and/or portable communications device, e.g. mobile phone or smartphone, is illustrated. The electronic device 201 of Fig. 2 may offer advanced computing capability. For example, the electronic device 201 may have the ability to run third party applications which are stored on the electronic device 201. For example, the device may run a messaging application ('app') which allows the user to send and receive messages. The app messages may be stored in memory 244 and displayed on display 204. In the context of the current discourse, the electronic device 201 may be a first or second electronic device 201, or both.

The electronic device 201 includes all of the components discussed above with reference to Fig. 1, or a subset of those components. The electronic device 201 includes a housing 104 which houses at least some of the components discussed above with reference to Fig. 1.

In the depicted embodiment, the electronic device 201 includes a display 204, which may be a touch-sensitive interface which acts as an input interface 206. The display 204 is disposed within the electronic device 201 so that it is viewable at a front side 102 of the electronic device 201. That is, a viewable side of the display 204 is disposed on the front side 102 of the electronic device. In the embodiment illustrated, the display 204 is framed by the housing 104.

The electronic device 201 also includes other input interfaces 206 such as one or more buttons, keys or navigational input mechanisms. In the embodiment illustrated, at least some of these additional input interfaces 206 are disposed for actuation at a front side 102 of the electronic device 201.

The electronic device 201 may also include a speaker 256. In the embodiment illustrated, the electronic device 201 includes a single speaker 256 which is disposed vertically above the display 204 when the electronic device 201 is held in a portrait orientation where its height is longer than its width. The speaker 256 may be disposed on the front face of the electronic device 201.

While the electronic device 201 of Fig. 2 includes a single speaker 256, in other embodiments, the electronic device 201 may include a greater number of speakers 256. For example, in at least some embodiments, the electronic device 201 may include a second speaker 256 which is disposed vertically below the display 204 when the electronic device 201 is held in a portrait orientation where its height is longer than its width (i.e. the orientation illustrated in Fig. 2).

The electronic device 201 also includes a microphone 258. In the embodiment illustrated, the microphone 258 is vertically disposed below the display 204 when the electronic device 201 is held in the portrait orientation. The microphone 258 and at least one speaker 256 may be arranged so that the microphone is in close proximity to a user's mouth and the speaker 256 is in close proximity to a user's ear when the user holds the phone to their face to converse on the electronic device 201.

The electronic device 201 also includes a front facing camera 253 which may be located vertically above the display 204 when the electronic device 201 is held in a portrait orientation where its height is longer than its width. The front facing camera 253 is located so that it may capture images of objects which are located in front of or surrounding the front side of the electronic device 201.

The electronic device 201 may also include an electromagnetic radiation source 257. The electromagnetic radiation source 257 is disposed on the front side 102 of the electronic device 201. In this orientation, electromagnetic radiation which is produced by the electromagnetic radiation source 257 may be projected onto objects which are located in front of or surrounding the front side of the electronic device 201. Such electromagnetic radiation (or the projection of electromagnetic radiation onto objects) may be captured on images detected by the camera 253.

Referring now to Fig. 3, a front view of an alternative electronic device 300 comprising the display 204 is illustrated. The depicted electronic device 300 may be an external electronic display device separate or remote from the electronic device 201 or built into the housing of the electronic device 201. The electronic device 300 may be in communication with the external video output port 254. The electronic device 300 may include a housing 304 which houses one or more of the components discussed above with reference to Fig. 1, or all of the components.

The electronic device 300 includes a display 204, which, as explained above, may include or overlap with a touch-sensitive interface which acts as the input interface 206. The display 204 is disposed within the electronic device 300 so that it is viewable at a front side 302 of the electronic device 300. That is, a viewable side of the display 204 is disposed on the front side 302 of the electronic device 300. In the embodiment illustrated, the display 204 is framed within the housing 304 by frame 312.

The frame 312 can surround the display 204 and is the portion of the housing 304 which provides a border around the display 204. In at least some embodiments, the frame 312 is an active frame 312. That is, the frame has a touch-sensitive overlay which allows the electronic device 201 to detect a touch applied to the frame thus allowing the frame 312 to act as component of the input interface 206.

The electronic device 300 may optionally include a plurality of speakers 256. In the embodiment illustrated, the tablet includes two speakers 256. The two speakers 256 are disposed on opposing sides of the display 204. More particularly, when the electronic device 300 is positioned in a landscape orientation (such as the orientation illustrated in Fig. 3) where its width is longer than its height, one of the two speakers is disposed on a right side 306 of the display 204 and one of the speakers is disposed on the left side 308 of the display 204. Both speakers 256 may be disposed on the front side 302 of the electronic device 300.

The electronic device 300 may also optionally include a microphone 258. In the embodiment illustrated, the microphone 258 is vertically disposed below the display 204 when the electronic device is held in the landscape orientation illustrated in Fig. 3. The microphone 258 may be located in other locations in other embodiments.

The electronic device 300 may also include a front facing camera 253 which may be located vertically above the display 204 when the electronic device 300 is held in a landscape orientation (i.e. the orientation of Fig. 3). The front facing camera 253 may be located on the electronic device 300 so that it may capture images of objects which are located in front of or surrounding the front side of the electronic device 300.

The electronic device 300, which may be a completely discrete and independent additional electronic device (similar or identical to electronic device 201) and contain the functionality of such a device completely independently from device 201. In this regard, the electronic device 300 may be being controlled by electronic device 201 so that the display 204 shows display data output by the device 201, separate from or in addition to display data generated internally by the device 300 acting as an additional electronic device. For example, the electronic device may be acting as a mirroring device for a display generated by device 201. Alternatively, the device 300 may be a standalone device, such as an integrated personal computer containing display 204 or a tablet computer.

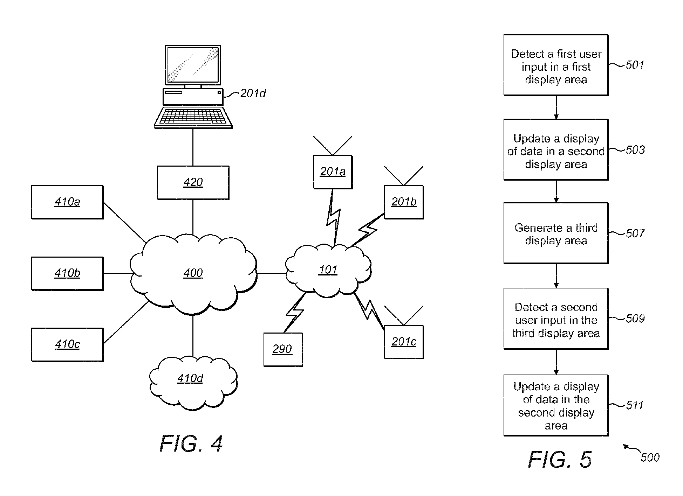

Fig. 4 shows a system of networked apparatus by which electronic communications can be sent and received using multiple electronic devices 201 a, 201 b, 201 c, one of which may include or be device 300. Referring to Fig. 4, electronic devices 201 a, 201 b and 201 c are connected to wireless network 101 to perform voice and data communications. Wireless network 101 is also connected to the communications network 400, e.g. Internet. Electronic device 201 d may be a computing device, which may be a personal computer, e.g. desktop, laptop or notebook computer, having one or more of the components and/or functionality of device 201 described above, and connected by a wired or wireless communication link to network 420, which is also connected to or forms part of the communications network 400. Electronic devices 201b and 201c may be computing or communication devices having one or more of the components and/or functionality of device 201 or 300 described above. As depicted, electronic devices 201 a, b, c, d may access the communications network 400 to perform data communications therewith and with each other.

Servers 410a, 410b, 410c and 410d are also connected to the communications network 400 and one or more of them may individually or together support electronic communications services available to end-users of electronic devices 201 a, 201 b, 201 c and 201 d, enabling them to send and receive electronic communications. Servers 410a, 410b, 410c and 410d may be web servers or communications servers, such as email servers transmitting and receiving data, such as electronic messages to, from and/or between electronic devices 201 a, 201 b, 201 c and 201 d.

Other servers and services may of course be provided allowing users of electronic devices 201 a, 201 b, 201 c and 201 d to send and receive electronic communications or messages by, for example, Voice over IP phone calls, video IP calls, video chat, group video chat, blogs, file transfers, instant messaging, and feeds.

Wireless network 101 may also support electronic communications without using communications network 400. For example, a user of electronic device 201 b may use wireless network 101 to make telephony calls, video calls, send text messages, send multimedia messages, and send instant messages to communications device 201c, and to display application data on a display screen of the external display device 300, or control the display of application data.

The embodiment shown in Fig. 4 is intended to be non-limiting and additional network infrastructure may of course be provided, such as a Public Switched Telephone Network (not shown), which may be used, for example, to make telephony calls using one communication device 201 a, 201 b, 201 c or 201 d to another, or to a wired phone (not shown).

In order to explain certain example modes of operation, reference is made below to Figs. 5 to 9.

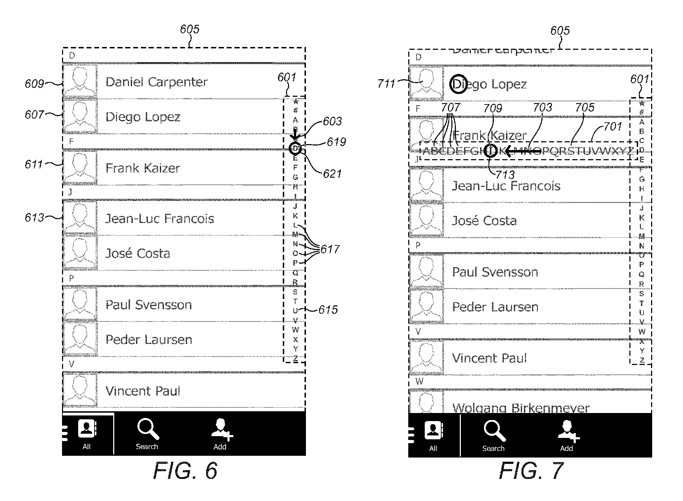

Fig. 5 is a flow chart depicting a method 500 performed by the processor 240 for identifying data which is output on the display screen 204. Figs. 6 to 9 depict the display screen 204 and the data that is output by the processor 240 during performance of the method 500.

At block 501, the processor 240 detects a first user input 603 at a first display area 601 of the display 204 via input interface 206. The first display area 601 corresponds to an area which can receive an input 603 to 605. As will be appreciated, the position of a first user input 603 made via input interface 206 in the first display area 601 corresponds to data to be obtained from memory 244, 246, 248 and displayed in the second display area 605.

At block 503, the processor 240 updates the data displayed in the second display area 605 in accordance with the position of the first user input 603.

At block 505, the processor generates a third display area 701 which is capable of receiving a second user input 703 via input interface 206 to update the data displayed in a second display area 605. As will be appreciated, the position of the second user input 703 in the third display area 701 corresponds to data to be displayed in the second display area 605. The processor, at block 507, is capable of detecting the second user input 703 via input interface 206 and updates, at block 509, the data displayed in the second display area 605 in accordance with the position of the second user input 603.

It will be appreciated that the display of data in the second display area may be updated in accordance with the first and second user inputs upon detection of the second user input. In this case, the second display area is only updated upon detection of the second user input. Alternatively, the display of data in the second display area may be updated in accordance with the first user input upon detection of the first user input, and the display of data in the second display area is updated in accordance with the second user input upon detection of the second user input. In this case, the second display area is updated once upon detection of the first user input but before the detection of the second user input, and again upon detection of the second user input.

Although the first, second and third display areas may be used for different display and input receiving operations, it will be appreciated that the first, second and third display areas may be distinct areas or they may overlap with each other. They may also exist concurrently, or replace each other, as described below. As depicted in Figs. 6 to 9, the first and third display areas 605, 701 are different to each other, but may overlap partially as depicted, or not at all. As depicted, the first and third display areas 605, 701 overlay the second display area 605. Thus, the position of the first and second user inputs 603, 703 are generally at different locations within the display 204, but are generally within the second display area 605.

With reference to Figs. 6 and 7, the data to be identified is a data item, or a subset of data items of a plurality of data items, which in the depicted example corresponds to a contact 607 of a plurality of contacts 607-613. However, it will be appreciated, that other types of data item may be displayed and identified in accordance with this disclosure. The plurality of contacts is primarily displayed in the second display area 605. As will be appreciated, the second display area 605 can receive a single user input to identify a contact of the plurality of contacts. However, this can require a user input which is significant in duration, or a user input which is formed of a series of user inputs within the second display area to obtain the desired contact, e.g. a tap input followed by a slide input.

A first display area 603 comprises a first bar 615 for receiving a first user input 603. The position of an input in the first bar 615 updates the contact displayed accordingly. For example, consider a list of contacts having corresponding identifying numbers 0 to 100; an input detected at a half-way point in the first display area will display contact number 50, and may also display neighbouring contacts in the second display area.

As will be appreciated, obtaining the desired position to view a desired contact is troublesome when the contacts are arranged in alphabetical order, e.g. the user's prediction does not reflect the position of the contact in the alphabetised list. In this case, the user is may only be able to obtain a position of a contact, which may or may not correspond to its relative alphabet position (e.g. of its first stored character).

Hence, in accordance in Fig. 6, the first bar 615 can comprise a plurality of characters 617, so that the user can update the contacts displayed according to the selected character in the first bar 615. For example, if a first user input 603 selects the character "D" 619 in the first bar 615, contacts (607, 609) relevant to the character "D" will be displayed. The selection of "D" is determined by the presence of the first user input on or in the vicinity of the character "D" in the first bar. Depending on pre-defined user preferences, contacts with a name with a first-positioned character "D" will be displayed or alternatively, contacts with a surname with a first-positioned character "D" will be displayed. In a more general principle, any contact related to or containing the character "D" can be displayed and for example may correspond to one of the contact's initials.

If only one bar is ever displayed on the display according to Fig. 6, the first bar 615 only provides a degree of granularity which may for example correspond to individual characters 617, or a subset of characters, of the alphabet. Hence, if there are a significant number of contacts in the plurality of contacts, the first bar 615, at best, provides a way to "narrow" down the possible contacts available for selection. However, if, for example, the character "D" has more corresponding contacts than can be displayed, the user would have to provide a further user input to the second display area 605 to find the desired contact, e.g. a slide input. Hence, several inputs may still be required to obtain the desired contact.

Thus, as can be seen from Fig. 7, upon detection of the first user input 603 to select the character "D", displaying a third display area 701 comprising a second bar 705 for receiving a second user input 703. The third display area 701 and thus the second bar 705 is displayed, in the second display area 605, orthogonally with respect to the first display area 601, and thus the first bar 615. It will be appreciated that the second bar 705 can be displayed at any orientation with respect to the first bar 615. It will also be appreciated that the first 615 and second 705 bars may be displayed concurrently upon completion of the first user input to select the character "D". If the bars are displayed concurrently, an indicator 621 may remain on the first bar 615 so that the user is aware of the previously selected character "D" 619. The indicated character may be the only displayed character in the first bar 615. It will also be appreciated that if the first 615 and second 705 bars are displayed concurrently, both bars can receive a respective user input. To facilitate this, as shown in Fig. 7 the characters within the first and second bar do not overlap to allow for independent character selection in the first 615 and second 705 bars. It will be appreciated that the functionality to permit input in the first 615 and second 705 bars can also be achieved by having a gap in the displayed characters in the second bar 705 where it intersects the first bar 615.

Alternatively, the first bar 615 may disappear on completion of the first user input 603 to select the character "D". As a further modification, the second bar 705 may replace the first bar.

The second bar 705 also comprises a plurality of characters 707, so that the user can update the contacts displayed according to the selected character in the second bar, which are already updated on the basis of the first user input to select the character "D" 619. In one example, the second bar 705 may comprise the complete alphabet. Alternatively, it will also be appreciated that the first user input 603 to select the character "D" 619 can be used to determine which characters to display in the second bar 705 on the basis of the contacts relevant to the first user input 603 to select the character "D" 619. For example, one instance of each second-positioned character within each data item which comprises the same first-positioned character "D", i.e. a name or surname beginning with the character "D", can be displayed in the second bar 705. In this way, the second bar will contain only one instance of second-positioned characters of contacts which start with the character "D" 619. This significantly reduces the degree of granularity required to select a character in the second bar 705.

Upon the second user input 703 selecting the character "I" 709 in the second bar 705, contacts relevant to the characters "D" and "I" will be displayed. The selection of "I" is determined by the presence of the second user input 703 on or in the vicinity of the character "I" 709 in the second bar 705. Depending on pre-defined user preferences, contacts with a name with a first-positioned character "D" and a second-positioned character "I" will be displayed 711 or alternatively, contacts with a surname with a first-positioned character "D" and a second-positioned character "I" will be displayed. In a more general principle, any contact related to or containing at least both the characters "D" and "I" can be displayed, which for example may correspond to a contact's initials.

The provision of the second bar 705 allows the user to significantly "narrow" down the desired contact from a plurality of contacts since only names or surnames of contacts relevant to both "D" and "I" in respect of first and second-positioned characters will be displayed.

The processor 240 can also be configured to determine that only one contact is relevant to both "D" and "I" upon completion of the second user input 703. In this case, the processor 240 may be configured to select the relevant contact upon detection of the second user input 703. The selection of the relevant contact would be understood to comprise making a telephone call, display details relevant to the contact, open a messaging or an email application for sending a message or email to the contact, or add the contacts contact information (i.e. email address) to an existing message.

As will be appreciated, a user may have a number of contacts in the plurality of contacts such that even when displaying contacts relevant to "D" and "I", a further input may be required in the second display area 605 to find the desired contact.

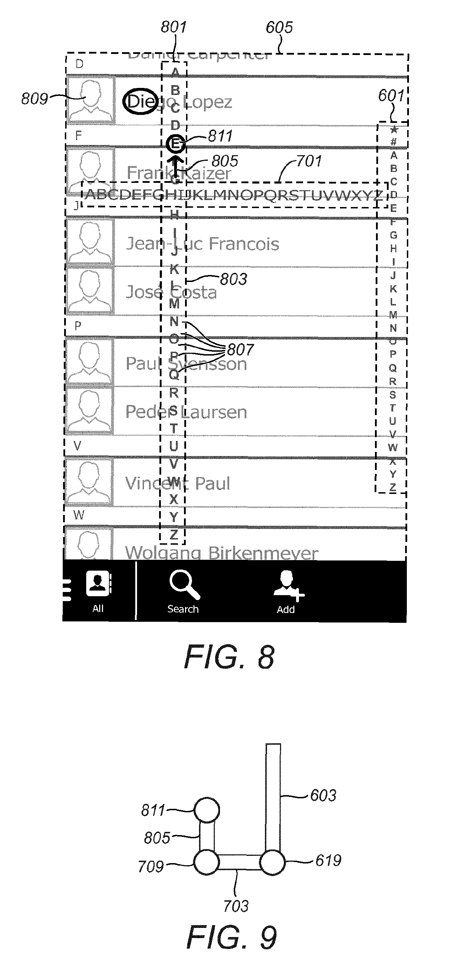

Hence, in a further exemplary embodiment, with reference to Fig. 8, the processor 240 can be configured, upon detection of the second user input 703 to select the character "I" 709, displaying a fourth display area 801 comprising a third bar 803 for receiving a third user input 805. The fourth display area 801 and thus the third bar 803 is displayed orthogonally with respect to the third display area 701, and thus the second bar 705. It will be appreciated that the third bar 803 can be displayed at any orientation with respect to the second bar 705. It will also be appreciated that the first 615, second 703 and third 805 bars may be displayed concurrently upon completion of the first 603 and second 703 user inputs to select respectively the characters "D" 615 and "I" 705. If the bars are displayed concurrently, an indicator 621, 713 may remain on the first 615 and second 705 bars so that the user is aware of the previously selected characters "D" 619 and "I" 709. The indicated characters may be the only displayed character in the first 615 and second 709 bars. It will also be appreciated that if the first 615, second 705, and third 803 bars are displayed concurrently, the bars can receive a respective user input. To facilitate this, the characters within each bar do not overlap to allow for independent character selection in the first 615, second 705 bars. As can be seen in Fig. 8, there is a gap in the displayed characters in the third bar 803 where it interests the second bar 705. It will be recognised that the functionality to permit input first 615, second 705, and third 803 bars can also be achieved by having no overlap in the first 615, second 705, and third 803 bars.

Alternatively, one or other or both of the first 615 and/or second 705 bar(s) may each disappear on completion of the second user input 703 to select the character "I" 709. As a further modification, the third bar 803 may replace the first 615 or second bar 705 once the respective first 615 or second bar 705 has disappeared.

The third bar 803 also comprises a plurality of characters 807, so that the user can update the contacts displayed in the second display area according to the selected character in the third bar 803, which are already updated on the basis of the first 603 and second 703 user input to select the characters "D" 619 and "I" 709 respectively. In one example, the second bar 705 may comprise the complete alphabet. Alternatively, it will also be appreciated that the first 603 and second 703 user inputs to select the characters "D" 619 and "I" 709 respectively can be used to determine which characters to display in the third bar 803 on the basis of the contacts 809 relevant to first 603 and second 703 user inputs to select the characters "D" 619 and "I" 709 respectively.. For example, one instance of each third-positioned character within each contact 809 which comprises the same first-positioned character "D" and a second-positioned character "I", e.g. a name or surname with respective first and second-positioned character "D" and "I", can be displayed in the second bar In this way, the third bar will only contain one instance of third-positioned characters of contacts with respective first and second-positioned characters "D" 619 and "I" 709. This further reduces the degree of granularity required to select a character in the third bar.

Upon the third user input 805 selecting the character "E" 811 in the third bar 803, contacts 809 relevant to or containing at least the characters "D", "I" and "E" will be displayed. The selection of "E" 811 is determined by the presence of the third user input 805 on or in the vicinity of the character "I" 811 in the third bar 803. Depending on pre-defined user preferences, contacts 809 with a name with a first-positioned character "D", a second-positioned character "I", and a third-positioned character "E" will be displayed or alternatively, contacts with a surname with a first-positioned character "D", a second-positioned character "I", and a third-positioned character "E will be displayed. In principle, any contact related to or containing the characters "D", "I" and "E" can be displayed which for example may correspond to a contact's initials

It will be appreciated that the display of data in the second display area may be updated in accordance with the first, second and third user inputs upon detection of the third user input. In this case, the second display area is only updated upon detection of the third user input. Alternatively, the display of data in the third display area may be updated in accordance with the first user input upon detection of the first user input, and the display of data in the second display area is updated in accordance with the second user input upon detection of the second user input, and the display of data in the second display area is updated in accordance with the third user input upon detection of the third user input. In this case, the second display area is once upon detection of the first user input but before the detection of the second user input, again upon detection of the second user input but before the detection of the third user input, and finally upon detection of the third user input.

The provision of the third bar 803 allows the user to further "narrow" down the desired contact 809 from a plurality of contacts since only names or surnames of contacts relevant to all "D" "I", and "E" in respect of their first, second, and third-positioned characters will be displayed.

The processor 240 can also be configured to determine that only one contact is relevant to or contains "D", "I", and "E" upon completion of the third user input 805. In this case, the processor can be configured to select the relevant contact upon completion of the third user input. The selection of the relevant contact would be understood to comprise making a telephone call, display details relevant to the contact, open a messaging or an email application for sending a message or email to the contact, or add the contacts contact information (i.e. email address) to an existing message.

As will be appreciated, the display of subsequent fifth, sixth, seventh etc. display areas with respective fourth, fifth, sixth etc. bars can be implemented if the number of contacts so requires.

The first 603, second 703 and third 805 user inputs, may be a tap, a click, a scroll or a swipe etc. Alternatively, they may be implemented in a continuous manner by a gesture as shown in Fig 9. The selected characters "D", "I", and "E" (619, 709, 811) in this case are determined by a resting point and/or change of direction in the gesture. In an alternative arrangement "D" and "I" may be selected by a gesture but "E" is selected by a discrete input, i.e. a tap or a click or a scroll or a swipe etc.. Other permutations of gestures and discrete inputs to select the characters are contemplated. It will also be appreciated that the gesture does not have to be implemented directly on the respective bars. In this way, the user can select the desired input in each bar by implementing a gesture in an orientation corresponding to the orientation of the respective bar. As the gesture progresses along an orientation corresponding to the orientation of the respective bar, respective indicators 621, 713, 813 may move in accordance with gesture. Provided the orientation of the gesture does not change, the user can change the selected character within each bar by maintaining the gesture direction corresponding to the orientation of the respective bar, i.e. the user can move forwards or backwards within each bar.

Although, it will be appreciated that a gesture or user inputs can be detected by an input interface 206 which is a touch-sensitive display, the user input may be received via an input interface 206 which is a pointing device, such as, for example, a mouse, trackball, trackpad etc., for controlling a pointer on the display. Alternatively, a stylus may be used. Other methods of gesture detection may be utilized. For example, a gesture may be a generalized trajectory description characterized as a sequence of 3D points in time, and as such many different sensors may be utilized to detect such a gesture. The gesture may be performed by moving a portable electronic device or moving one or more body parts, such as fingers or thumbs as a 3D spatial gesture in the vicinity of an external display acting as display 204. For example, sensors, such as an accelerometer/gyroscope, or proximity sensors, or time-of-flight cameras may detect such gestures. Gesture recognition and detection techniques of this type are known.

An accelerometer or gyroscope may be utilized to detect 3D spatial gestures. A sequence of acceleration values may be detected in the different spatial dimensions as a function of time and constitute trajectory information that can be recognized as a gesture. For example, a flick or tilt of the portable electronic device are examples of detectable gestures. A 3D spatial gesture includes a continuous movement, a sequence of movements, and a series of continuous movements or sequences of movements. Proximity sensors, optical sensors, and/or cameras may be utilized to detect 3D spatial gestures comprising motion of objects spaced from the device. A gesture input is different to input of a command by manipulation of a control component presented on the screen because a gesture input can be performed at any location within the display screen (or a large area of the display screen) in contrast to a single contact point for a user finger or input stylus on a corresponding control element. In order to input a command using a control component, the user must contact the screen at a specific location corresponding to that component. For example, in order to change an output volume using a volume control, the user must select the volume control by touching the location at which the volume control is displayed and moving the displayed control element by a desired amount through movement of the user's finger across the screen. Such user input must therefore be precisely controlled in order to use control elements to input commands. Gesture-based inputs, on the other hand, do not require the same precise control as they are not tied to a specific display object on the screen, but may instead correspond to an area or sub-area of the screen.

Although the exemplary embodiment is used to identify a contact of the plurality of contacts, the methods, devices and computer readable mediums described herein may identify any item of a plurality of data items, for example a media item in a digital media item library stored in the memory 244, 246, 248, an item in a database stored in the memory 244, 246, 248, or any data item from a plurality of data items, or any data that has a correlated/associated string value which is stored in memory 244, 246, 248.

Whilst the present disclosure is primarily described in terms of devices 201, 300 and 500 and corresponding methods, the devices may include components for performing at least some or all of the example aspects and features of the described methods, be it by way of hardware components (such as the memory 244, 246, 248 and/or the processor 240), software or any combination of the two. Moreover, an article of manufacture for use with the device, such as a pre-recorded storage device or other similar computer-readable medium including program instructions recorded thereon may direct the device to facilitate the practice of the described methods. It should be understood that such devices and articles of manufacture come within the scope of the present application.

The term "computer-readable medium" as used herein means any medium which can store instructions for use by or execution by a computer, processing circuitry or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)). The computer-readable medium may be a non-transitory computer-readable medium.

It will be appreciated that the foregoing discussion relates to particular embodiments. However, in other embodiments, various aspects and examples may be combined.

### Embodiments

The following is a non-exhaustive list of embodiments, which are claimed or may be claimed.
1. A method for identifying data stored on an electronic device, comprising:
   (1 a) detecting a first user input in a first display area of a display;
   (1 b) updating a display of data on a second display area of the display in accordance with the detected first user input;
   (1 c) generating a third display area on the display for receiving a second user input;
   (1 d) detecting a second user input in the third display area; and
   (1 e) updating the display of the data in the second display area in accordance with the detected second user input.
2. The method of embodiment 1 wherein step (1 b) further comprises:
   updating the display of data in the second display area upon detection of the first user input,
   wherein step (1e) comprises updating the display of data in the second display area upon detection of the second user input.
3. The method of any preceding embodiment, wherein the data comprises a plurality of data items displayed in the second display area.
4. The method of embodiment 3, wherein step (1b) comprises, responsive to the detected first user input, identifying at least one data item of the plurality of data items.
5. The method of embodiment 4, wherein step (1e) comprises, responsive to the detected second user input, identifying at least one data item of the plurality of data items
6. The method of embodiment 5, wherein the first display area comprises a plurality of characters.
7. The method of embodiment 6, wherein the third display area comprises a plurality of characters.
8. The method of embodiment 7, further comprising:
   identifying a first character on the first display area to which the first user input corresponds;
   identifying a second character on the third display area to which the second user input corresponds,
   wherein step (1 b) comprises updating the display of data in the third display area to display data items corresponding to the indentified first character, and wherein step (1e) comprises updating the display of data in the second display area to display data items corresponding to both of the identified first and second characters.
9. The method of embodiment 8, wherein a touch-sensitive input interface overlays or is comprised within the display, and wherein the identified first or second character is identified by detecting a touch on the touch-sensitive input interface on or in the vicinity of the identified first or second character respectively.
10. The method of embodiment 8 or embodiment 9, wherein step (1e) comprises updating the display of data in the second display area to display only data items which share as first-positioned and second-positioned characters respectively the identified first and second characters.
11. The method of any one of embodiments 7 to 10, wherein the third display area comprises a subset of characters of the first display area.
12. The method of embodiment 11, wherein the subset of characters comprises at least one instance of each second-positioned character comprised within each data item which share the same first-positioned character as the identified first character.
13. The method of embodiment 12, further comprising:
   determining that only one data item corresponds to the identified first and second characters or comprises as first-positioned and second-positioned characters respectively the identified first and second characters; and
   selecting the data item upon detection of the second user input.
14. The method of any one of embodiments 8 to 13, further comprising:
   (1f) generating a fourth display area on the display comprising a third display area comprising a plurality of characters for receiving a third user input;
   (1g) identifying a third character on the fourth display area to which the third user input corresponds; and
   updating the display of data in the second display area to display data items corresponding to the identified first, second and third characters.
15. The method of embodiment 14, wherein step (1h) further comprises updating the display of data in the second display area upon detection of the third user input.
16. The method of embodiment 15, wherein step (1h) comprises, responsive to the detected third user input, identifying at least one data item of the plurality of data items.
17. The method of embodiment 16, wherein a touch-sensitive input interface overlays or is comprised within the display, and wherein the identified third character is identified by detecting a touch on the touch-sensitive input interface on or in the vicinity of the identified third character.
18. The method of any one of embodiments 14 to 17, wherein step (1h) comprises updating the display of data in the second display area to display only data items which share as first-positioned, second-positioned and third characters respectively the identified first, second and third-positioned characters.
19. The method of any one of embodiments 14 to 18, wherein the fourth display area comprises a subset of characters of the second display area.
20. The method of embodiment 19, wherein the subset of characters comprises at least one instance of each third-positioned character of the data items which share the same first-positioned and second-positioned characters respectively as the identified first and second characters.
21. The method of any one of embodiments 18 to 20, further comprising:
   determining that only one data item corresponds to the identified first, second, and third characters or comprises as first-positioned, second-positioned and third-positioned characters respectively the identified first, second and third characters;
   selecting the data item upon detection of the third user input.
22. A method for identifying data stored on an electronic device, comprising:
   (22a) detecting a first user input in a first display area of a display;
   (22b) generating a third display area on the display for receiving a second user input;
   (22c) detecting a second user input in the third display area; and
   (22d) updating the display of the data in the second display area in accordance with the detected first and second user inputs.
23. The method of embodiment 22, wherein step (22d) further comprises updating the display of data in the second display area on detection of the second user input.
24. The method of embodiment 23, wherein the data comprises a plurality of data items displayed in the second display area.
25. The method of embodiment 24, wherein step (22d) comprises, responsive to the detected first user input, identifying at least one data item of the plurality of data items.
26. The method of embodiment 25, wherein step (22d) comprises, responsive to the detected second user input, identifying at least one data item of the plurality of data items.
27. The method of embodiment 26, wherein the first display area comprises a plurality of characters.
28. The method of embodiment 27, wherein the third display area comprises a plurality of characters.
29. The method of embodiment 28, further comprising:
   identifying a first character on the first display area to which the first user input corresponds;
   identifying a second character on the third display area to which the second user input corresponds,
   wherein step (22d) comprises updating the display of data in the second display area to display data items corresponding to both of the identified first and second characters.
30. The method of embodiment 29, wherein a touch-sensitive input interface overlays or is comprised within the display, and wherein the identified first or second character is identified by detecting a touch on the touch-sensitive input interface on or in the vicinity of the identified first or second character respectively.
31. The method of embodiment 30, wherein the step (22d) comprises updating the display of data in the second display area to display only data items which share as first-positioned and second-positioned characters respectively the identified first and second characters.
32. The method of any one of embodiments 28 to 31, wherein the third display area comprises a subset of characters of the first display area.
33. The method of embodiment 32, wherein the subset of characters comprises one instance of each second-positioned character comprised within each data item which comprises the same first-positioned character comprised with said each data item as the identified first character.
34. The method of embodiment 33, further comprising:
   determining that only one data item corresponds to the identified first and second characters or comprises as first-positioned and second-positioned characters respectively the identified first and second characters; and
   selecting the data item on detection of the second user input.
35. The method of any one of embodiments 29 to 34, further comprising:
   (22e) generating a fourth display area on the display comprising a plurality of characters for receiving a third user input;
   (22f) identifying a third character on the fourth display area to which the third user input corresponds; and
   (22g) updating the display of data in the second display area to display data items corresponding to the identified first, second and third characters.
36. The method of embodiment 35, wherein step (22g) further comprises updating the display of data in the second display area on detection of the third user input.
37. The method of embodiment 35, wherein step (22g) comprises, responsive to the detected third user input, identifying at least one data item of the plurality of data items.
38. The method of embodiment 36, wherein a touch-sensitive input interface overlays or is comprised within the display, and wherein the identified third character is identified by detecting a touch on the touch-sensitive input interface on or in the vicinity of the identified third character.
39. The method of any one of embodiments 35 to 38, wherein step (22g) comprises updating the display of data in the second display area to display only data items which comprise as first-positioned, second-positioned and third characters respectively the identified first, second and third-positioned characters.
40. The method of any one of embodiments 35 to 39, wherein the fourth display area comprises a subset of characters of the third display area.
41. The method of embodiment 40, wherein the subset of characters comprises at least one instance of each third-positioned character of the data items which share the same first-positioned and second-positioned characters respectively as the identified first and second characters.
42. The method of any one of embodiments 39 to 41, further comprising:
   determining that only one data item corresponds to the identified first, second, and third characters or comprises as first-positioned, second-positioned and third-positioned characters respectively the identified first, second and third characters;
   selecting the data item upon detection of the third user input.
43. The method of any one of embodiments 3 to 21 or embodiments 24 to 42, wherein each data item is a contact, or a media item in a digital media item library, or an item in a database, or any data that has a correlated/associated string value.
44. The method of any one of the preceding embodiments, wherein the first user input is continuous with the second user input and/or wherein the second user input is continuous with the third user input.
45. The method of any one of the preceding embodiments, wherein the first and third display areas are generated such that they are orthogonally positioned on the display relative to each other.
46. The method of any one of the preceding embodiments, wherein the first display area is a first bar.
47. The method of any one of the preceding embodiments, wherein the third display area is a second bar.
48. The method of any one of embodiments 14 to 21, or embodiments 35 to 47, wherein the third and fourth display areas are generated such that they are orthogonally positioned on the display relative to each other.
49. The method of any one of embodiments 14 to 21, or embodiments 35 to 48, wherein the fourth display area is a third bar.
50. A computer-readable medium comprising executable instructions which, when executed, cause a processor to perform a method according to any one of the preceding embodiments.
51. An electronic device for identifying data, the device comprising:
   a display;
   a processor in communication with the display device, wherein the processor is configured to:
      detect a first user input in a first display area of the display;
      update in a first updating step a display of data on a second display area of the display in accordance with the detected first user input;
      generate a third display area on the display for receiving a second user input;
      detect a second user input in the third display area; and
      update in a second updating step the display of the data in the second display area in accordance with the detected second user input.
52. The electronic device of embodiment 51, wherein the processing circuitry is further configured to perform the method of any one of embodiments 2 to 21 and embodiments 44 to 49.
53. The electronic device of embodiment 51, wherein the processing circuitry is further configured to:
   perform the first updating step to display data in the second display area upon detection of the first user input; and
   perform the second updating step to display data in the second display area upon detection of the second user input.
54. The electronic device of any one of embodiments 51 or 53, wherein the processing circuitry is further configured to display data comprising a plurality of data items in the second display area.
55. The electronic device of embodiment 54, wherein the processing circuitry is further configured to perform the first updating step, responsive to the detected first user input, to identify at least one data item of the plurality of data items.
56. The electronic device of embodiment 55, wherein the processing circuitry is further configured to perform the second updating step, responsive to the detected second user input, to identify at least one data item of the plurality of data items.
57. The electronic device of embodiment 56, wherein the processing circuitry is further configured to display a plurality of characters in the first display area.
58. The electronic device of embodiment 57, wherein the processing circuitry is further configured to display a plurality of characters in the third display area.
59. The electronic device of embodiment 57, wherein the processing circuitry is further configured to:
   identify a first character on the first display area to which the first user input corresponds;
   identify a second character on the third display area to which the second user input corresponds,
   perform the first updating step to update the display of data in the third display area to display data items corresponding to the identified first character, and perform the second updating step to update the display of data in the second display area to display data items corresponding to both of the identified first and second characters.
60. The electronic device of embodiment 59, wherein a touch-sensitive input interface overlays or is comprised within the display, and wherein the identified first or second character is identified by detecting a touch on the touch-sensitive input interface on or in the vicinity of the identified first or second character respectively.
61. The electronic device of embodiment 60, wherein the processing circuitry is further configured step to perform the second updating step to update the display of data in the second display area to display only data items which share as first-positioned and second-positioned characters respectively the identified first and second characters.
62. The electronic device of any one of embodiments 58 to 60, wherein the processing circuitry is further configured to display in the third display area comprises a subset of characters of the first display area.
63. The electronic device 62, wherein the subset of characters comprises at least one instance of each second-positioned character comprised within each data item which share the same first-positioned character as the identified first character.
64. The electronic device of embodiment 63, wherein the processing circuitry is further configured to:
   determine that only one data item corresponds to the identified first and second characters or comprises as first-positioned and second-positioned characters respectively the identified first and second characters; and
   select the data item upon detection of the second user input.
65. The electronic device of any one of embodiments 59 to 64, wherein the processing circuitry is further configured to:
   generate a fourth display area on the display comprising a third display area comprising a plurality of characters for receiving a third user input;
   identify a third character on the fourth display area to which the third user input corresponds; and
   update in a third updating step the display of data in the second display area to display data items corresponding to the identified first, second and third characters.
66. The electronic device of embodiment 65, wherein the processing circuitry is further configured to perform the third updating step to update the display of data in the second display area upon detection of the third user input.
67. The electronic device of embodiment 66, wherein the processing circuitry is further configured to perform the third updating step, responsive to the detected third user input, to identify at least one data item of the plurality of data items.
68. The electronic device of embodiment 67, wherein a touch-sensitive input interface overlays or is comprised within the display, and wherein the identified third character is identified by detecting a touch on the touch-sensitive input interface on or in the vicinity of the identified third character.
69. The electronic device of any one of embodiments 65 to 68, wherein the processing circuitry is further configured to perform the third updating step to update the display of data in the second display area to display only data items which share as first-positioned, second-positioned and third characters respectively the identified first, second and third-positioned characters.
70. The electronic device of any one of embodiments 65 to 69, wherein the fourth display area comprises a subset of characters of the second display area.
71. The electronic device of embodiment 70, wherein the subset of characters comprises at least one instance of each third-positioned character of the data items which share the same first-positioned and second-positioned characters respectively as the identified first and second characters.
72. The electronic device of any one of embodiments 69 to 71, wherein the processing circuitry is further configured to:
   determine that only one data item corresponds to the identified first, second, and third characters or comprises as first-positioned, second-positioned and third-positioned characters respectively the identified first, second and third characters; and
   select the data item upon detection of the third user input.
73. An electronic device for identifying data, the device comprising:
   a display;
   a processor in communication with the display device, wherein the processor is configured to:
      detect a first user input in a first display area of the display;
      generate a third display area on the display for receiving a second user input;
      detect a second user input in the third display area; and
      update in an updating step the display of the data in the second display area in accordance with the detected first and second user inputs.
74. The electronic device of embodiment 73, wherein the processing circuitry is further configured to perform the method of any one of embodiments 22 to 49.
75. The electronic device of embodiment 74, wherein the processor is further configured to perform the updating step to update the display of data in the second display area on detection of the second user input.
76. The electronic device of any one of embodiments 73 or 75, wherein the processing circuitry is further configured to display data comprising a plurality of data items in the second display area.
77. The electronic device of embodiment 76, wherein the processing circuitry is further configured to perform the updating step, responsive to the detected second user input, to identify at least one data item of the plurality of data items.
78. The electronic device of embodiment 77, wherein the processing circuitry is further configured to display a plurality of characters in the first display area.
79. The electronic device of embodiment 78, wherein the processing circuitry is further configured to display a plurality of characters in the third display area.
80. The electronic device of embodiment 79, wherein the processing circuitry is further configured to:
   identify a first character on the first display area to which the first user input corresponds;
   identify a second character on the third display area to which the second user input corresponds;
   perform the second updating step to update the display of data in the second display area to display data items corresponding to both of the identified first and second characters.
81. The electronic device of embodiment 80, wherein a touch-sensitive input interface overlays or is comprised within the display, and wherein the identified first or second character is identified by detecting a touch on the touch-sensitive input interface on or in the vicinity of the identified first or second character respectively.
82. The electronic device of embodiment 81, wherein the processing circuitry is further configured step to perform the updating step to update the display of data in the second display area to display only data items which share as first-positioned and second-positioned characters respectively the identified first and second characters.
83. The electronic device of any one of embodiments 80 to 82, wherein the processing circuitry is further configured to display in the third display area comprises a subset of characters of the first display area.
84. The electronic device of embodiment 83, wherein the subset of characters comprises at least one instance of each second-positioned character comprised within each data item which share the same first-positioned character as the identified first character.
85. The electronic device of embodiment 84, wherein the processing circuitry is further configured to:
   determine that only one data item corresponds to the identified first and second characters or comprises as first-positioned and second-positioned characters respectively the identified first and second characters; and
   select the data item upon detection of the second user input.
86. The electronic device of any one of embodiments 80 to 85, wherein the processing circuitry is further configured to:
   generate a fourth display area on the display comprising a third display area comprising a plurality of characters for receiving a third user input;
   identify a third character on the fourth display area to which the third user input corresponds; and
   perform the updating step to update the display of data in the second display area to display data items corresponding to the identified first, second and third characters.
87. The electronic device of embodiment 86, wherein the processing circuitry is further configured to perform the updating step to update the display of data in the second display area upon detection of the third user input.
88. The electronic device of embodiment 87, wherein the processing circuitry is further configured to perform the updating step, responsive to the detected third user input, to identify at least one data item of the plurality of data items.
89. The electronic device of embodiment 88, wherein a touch-sensitive input interface overlays or is comprised within the display, and wherein the identified third character is identified by detecting a touch on the touch-sensitive input interface on or in the vicinity of the identified third character.
90. The electronic device of any one of embodiments 86 to 89, wherein the processing circuitry is further configured to perform the updating step to update the display of data in the second display area to display only data items which share as first-positioned, second-positioned and third characters respectively the identified first, second and third-positioned characters.
91. The electronic device of any one of embodiments 86 to 90, wherein the fourth display area comprises a subset of characters of the second display area.
92. The electronic device of embodiment 91, wherein the subset of characters comprises at least one instance of each third-positioned character of the data items which share the same first-positioned and second-positioned characters respectively as the identified first and second characters.
93. The electronic device of any one of embodiments 90 to 92, wherein the processing circuitry is further configured to:
   determine that only one data item corresponds to the identified first, second, and third characters or comprises as first-positioned, second-positioned and third-positioned characters respectively the identified first, second and third characters; and
   select the data item upon detection of the third user input.
94. The electronic device of any one of embodiments 51, 53 to 73, or 75 to 93, wherein the processing circuitry is further configured to identify a data item comprising a contact, or a media item in a digital media item library, or an item in a database, or any data that has a correlated/associated string value.
95. The electronic device of any one of embodiments 51, 53 to 73, or 75 to 94, wherein the processing circuitry is further configured to, identify that the first user input is continuous with the second user input and/or wherein the second user input is continuous with the third user input.
96. The electronic device of any one of embodiments 51, 53 to 73, or 75 to 95, wherein the processing circuitry is further configured to generate the first and third display areas such that they are orthogonally positioned on the display relative to each other.
97. The electronic device of any one of embodiments 51, 53 to 73, or 75 to 96, wherein the processing circuitry is further configured to display a first bar in the first display area.
98. The electronic device of any one of embodiments 51, 53 to 73, or 75 to 97, wherein the processing circuitry is further configured to display a second bar in the third display area.
99. The electronic device of any one of embodiments 65 to 72, or embodiments 86 to 98, wherein the processing circuitry is further configured to generate the third and fourth display areas such that they are orthogonally positioned on the display relative to each other.
100. The method of any one of embodiments 65 to 72, embodiments 86 to 99, wherein the processing circuitry is further configured to display a third bar in the fourth display area.

## Claims

1. A method for identifying data stored on an electronic device, comprising:
(1 a) detecting a first user input in a first display area of a display;
(1 b) updating a display of data on a second display area of the display in accordance with the detected first user input;
(1 c) generating a third display area on the display for receiving a second user input;
(1 d) detecting a second user input in the third display area; and
(1 e) updating the display of the data in the second display area in accordance with the detected second user input.

2. The method of claim 1, wherein step (1 b) further comprises:
updating the display of data in the second display area upon detection of the first user input,
wherein step (1e) comprises updating the display of data in the second display area upon detection of the second user input.

3. The method of claim 2, wherein the data comprises a plurality of data items displayed in the second display area.

4. The method of claim 3, wherein step (1b) comprises, responsive to the detected first user input, identifying at least one data item of the plurality of data items; and/or wherein step (1e) comprises, responsive to the detected second user input, identifying at least one data item of the plurality of data items

5. The method of claim 4, wherein the first display area comprises a plurality of characters, or the first and third display areas comprise a plurality of characters.

6. The method of claim 5, further comprising:
identifying a first character on the first display area to which the first user input corresponds;
identifying a second character on the third display area to which the second user input corresponds,
wherein step (1 b) comprises updating the display of data in the third display area to display data items corresponding to the detected character, and wherein step (1 e) comprises updating the display of data in the second display area to display data items corresponding to both of the identified first and second characters.

7. The method of claim 6, wherein
a touch-sensitive input interface overlays or is comprised within the display, and wherein the identified first or second character is identified by detecting a touch on the touch-sensitive input interface on or in the vicinity of the identified first or second character respectively; or
wherein step (1e) comprises updating the display of data in the second display area to display only data items which share as first-positioned and second-positioned characters respectively the identified first and second characters; or
wherein the third display area comprises a subset of characters of the first display area; or
wherein the method further comprises:
(1f) generating a fourth display area on the display comprising a plurality of characters for receiving a third user input;
(1g) identifying a third character on the fourth display area to which the third user input corresponds; and
(1 h) updating the display of data in the second display area to display data items corresponding to the identified first, second and third characters.

8. The method of claim 7, wherein the subset of characters comprises at least one instance of each second-positioned character comprised within each data item which share the same first-positioned character as the identified first character.

9. The method of claim 8, further comprising:
determining that only one data item corresponds to the identified first and second characters or comprises as first-positioned and second-positioned characters respectively the identified first and second characters; and
selecting the data item upon detection of the second user input.

10. The method of claim 7,
wherein step (1h) further comprises updating the display of data in the second display area upon detection of the third user input; or
wherein step (1h) further comprises updating the display of data in the second display area to display only data items which share as first-positioned, second-positioned and third characters respectively the identified first, second and third-positioned characters; or
wherein the fourth display area comprises a subset of characters of the second display area.

11. The method of claim 10, wherein step (1h) comprises, responsive to the detected third user input, identifying at least one data item of the plurality of data items.

12. The method of claim 10, wherein a touch-sensitive input interface overlays or is comprised within the display, and wherein the identified third character is identified by detecting a touch on the touch-sensitive input interface on or in the vicinity of the identified third character; or
wherein the subset of characters comprises at least one instance of each third-positioned character of the data items which share the same first-positioned and second-positioned characters respectively as the identified first and second characters.

13. A method for identifying data stored on an electronic device, comprising:
(13a) detecting a first user input in a first display area of a display;
(13b) generating a third display area on the display for receiving a second user input;
(13c) detecting a second user input in the third display area; and
(13d) updating the display of the data in the second display area in accordance with the detected first and second user inputs.

14. The method of claim 13, wherein step (13d) further comprises updating the display of data in the second display area on detection of the second user input.

15. An electronic device for identifying data, the device comprising:
a display;
a processor in communication with the display device, wherein the processor is configured to:
detect a first user input in a first display area of the display;
update a display of data on a second display area of the display in accordance with the detected first user input;
generate a third display area on the display for receiving a second user input;
detect a second user input in the third display area; and
update the display of the data in the second display area in accordance with the detected second user input.
